# EUROPÄISCHE PATENTSCHRIFT

(11) **EP 1 584 525 B1**
(45) Veröffentlichungstag und Bekanntmachung des Hinweises auf die Patenterteilung: **19.09.2007**
(21) Anmeldenummer: 05102632.6
(22) Anmeldetag: 04.04.2005
(51) Int. Cl.: B60R 25/00, B60R 25/02

(54) **Vorrichtung mit mindestens zwei Bauteilen und einem bolzenförmigen Verbindungselement**
Device with at least two elements and a bolt type connecting element
Dispositif ayant au moins deux éléments de construction et un élément de liaison en forme de boulon

(30) Priorität: 10.04.2004 DE 102004017695
(43) Veröffentlichungstag der Anmeldung: 12.10.2005
(73) Patentinhaber: Valeo Sicherheitssysteme GmbH, 85253 Erdweg (DE)
(72) Erfinder: Linder, Anton, 94042, CRETEIL Cedex (FR); Lehmeier, Norbert, 94042, CRETEIL Cedex (FR); Starken, Harald, 94042, CRETEIL Cedex (FR); Depoorter, Kurt, 94042, CRETEIL Cedex (FR)
(74) Vertreter: Podszus, Burghart

(56) Entgegenhaltungen:
- DE-U1- 20 311 391
- US-A1- 2001 012 470

## Beschreibung

Die Erfindung betrifft eine Vorrichtung mit mindestens zwei Bauteilen oder Bauteilgruppen (im folgenden zusammenfassend als Bauteile bezeichnet) und einem bolzenförmigen Verbindungselement. Die Erfindung bezieht sich ferner auf eine Verwendung der Vorrichtung zur Befestigung eines Lenkschlosses an der Lenksäule eines Kraftfahrzeuges.

Es ist bekannt, zur Verbindung des Lenkschlosses an der Lenksäule eines Kraftfahrzeuges einen Querbolzen zu verwenden. Dabei wird das Lenkschloßgehäuse in eine mit der Lenksäule fest verbundene gehäuseförmige Aufnahme eingesetzt und der Querbolzen durch zwei gegenüberliegende Seitenwände der Aufnahme und durch das Lenkschloßgehäuse hindurchgeführt.

Die bekannten Befestigungen mit Hilfe eines derartigen Querbolzens erfordern einen zusätzlichen Toleranzausgleich zur klapperfreien Verbindung des Lenkschlosses mit der gehäuseförmigen Aufnahme mit dauerhaft bleibender Vorspannung und maximaler Ausnutzung des Sperrbolzenhubs des Lenkschlosses.

Zur spielfreien Befestigung von Bauteilen ist es aus der US 4,372,703 bekannt, einen Gewindebolzen mit einem konusförmigen Teilbereich zu verwenden, der in ein Gewinde eines ersten Bauteiles eingeschraubt wird und dabei über die konische Außenfläche ein mit dem ersten Bauteil zu verbindendes zweites Bauteil (z.B. eine Lagerbuchse) gegen eine entsprechende Anlagefläche des ersten Bauteiles drückt.

Aus der EP 0 712 773 B1 ist es ferner bekannt, zur spielfreien Befestigung des Lenkrades an der Lenkwelle eines Kraftfahrzeuges ebenfalls einen Gewindebolzen mit konusförmigem Teilbereich zu benutzen, der in ein Gewinde der Nabe des Lenkrades eingeschraubt wird und über die konische Außenfläche gegen den Lagerzapfen der Lenkwelle drückt, so daß Nabe und Lagerzapfen sich relativ zueinander verschieben und formschlüssig miteinander verbunden werden.

Als nachteilig hat es sich bei den bekannten Vorrichtungen mit spielfreier Befestigung der Bauteile unter anderem erwiesen, daß es aufgrund der Zwangsführung des Gewindebolzens in dem jeweiligen zweiten Bauteil zu einer nicht optimalen Anlage des konischen Bereiches des Gewindebolzens und des komplementären Anlagebereiches des zu verschiebenden ersten Bauteiles kommen kann.

Außerdem werden bei den bekannten Vorrichtungen Beanspruchungen des ersten Bauteiles, die in Richtung der Längsachse des Gewindebolzens auf dieses Bauteil wirken, direkt auf das jeweils zweite Bauteil übertragen. Insbesondere bei Verwendung eines Querbolzens zur Befestigung des Lenkschlosses an der Lenksäule eines Kraftfahrzeuges sollte eine derartige direkte Kraftübertragung aber vermieden werden, damit es bei gewaltsamen Drehversuchen der verriegelten Lenksäule nicht zu einer Verformung des Lenkschlosses bzw. der mit der Lenksäule verbundenen Lenkschloßaufnahme etc. kommt.

Aus der US 2001/0012470 A ist eine zwei Bauteile umfassende Vorrichtung bekannt, bei der das erste Bauteil sowie ein etwa U-förmiges zweites Bauteil mit Führungen versehen sind, in denen ein Gewindebolzen gelagert ist. Der Gewindebolzen ist in eine Mutter einschraubbar und weist einen konusförmigen Bereich auf, der sich bei Drehung des Gewindebolzens verschiebt und gegen einen komplementären Bereich des ersten Bauteiles drückt. Das erste Bauteil wird dann senkrecht zur Bewegungsrichtung des Gewindebolzens gegen eine Anlagefläche des zweiten Bauteiles gepreßt.

Aus der DE 203 11 391 U ist ferner eine Haltevorrichtung für ein Werkzeug bekannt. Dabei weist ein erstes schaftförmiges Bauteil eine als Kegelbohrung ausgebildete Ausnehmung für einen Gewindebolzen auf, der in Führungen eines zweiten Bauteiles gelagert ist.

Der Erfindung liegt die Aufgabe zugrunde, eine Vorrichtung der eingangs erwähnten Art anzugeben, bei der eine spielfreie Verbindung zwischen den beiden miteinander verbundenen Bauteilen sichergestellt ist und bei welcher die beiden Bauteile die gewünschte Position auch tatsächlich einnehmen.

Diese Aufgabe wird erfindungsgemäß durch die Merkmale des Anspruchs 1 gelöst. Weitere, besonders vorteilhafte Ausgestaltungen der Erfindung offenbaren die Unteransprüche. Anspruch 4 offenbart eine erfindungsgemäße Verwendung der Vorrichtung zur Befestigung eines Lenkschlosses an der Lenksäule eines Kraftfahrzeuges.

Die Erfindung beruht im wesentlichen auf dem Gedanken, den Gewindebolzen nicht in ein Gewinde des zweiten Bauteiles einzuschrauben, sondern in eine separate Mutter, wobei Gewindebolzen und Mutter senkrecht zur Längsachse des Gewindebolzens in einem vorgegebenen Toleranzbereich verschiebbar angeordnet sind. Der Gewindebolzen und/oder die Mutter weisen dabei einen konusförmigen Bereich auf, der sich bei Drehung des Gewindebolzens verschiebt und gegen einen komplementären Bereich des ersten Bauteiles drückt und dieses in eine senkrecht zur Bewegungsrichtung des Gewindebolzens gerichtete Spannrichtung verschiebt, so daß das erste Bauteil gegen eine Anlagefläche des zweiten Bauteiles gepreßt wird.

Durch die Verschiebbarkeit des Gewindebolzens mit Mutter in einer zur Längsachse des Gewindebolzens senkrechten Richtung entsteht ein selbstjustierendes System, so daß beim Anziehen des Gewindebolzens immer die gewünschte Position der Bauteile zueinander erreicht wird. Dabei stützt sich der Gewindebolzen in einem Bereich der seitlichen Führungen ab und die verschiebbare Mutter übernimmt im wesentlichen den Toleranzausgleich.

Vorteilhafterweise kann der Gewindebolzen mit einem Abreißkopf versehen sein, welcher bei einem vorgebbaren Drehmoment und damit einer vorgegebenen Anpreßkraft des ersten Bauteiles gegen das zweite Bauteil abreißt, so daß Fehlmontagen gering gehalten werden können.

Bei einer besonders vorteilhaften Ausführungsform der Erfindung handelt es sich bei dem ersten Bauteil um das Lenkschloß und bei dem zweiten Bauteil um die Lenksäule eines Kraftfahrzeuges. Dabei ist das erste Bauteil gegenüber dem zweiten Bauteil in Richtung der Längsachse des Gewindebolzens verschiebbar ausgebildet, so daß bei Ausübung von Kräften auf das erste Bauteil in einer zur Längsachse des Gewindebolzens parallelen Richtung nach Überwindung des zwischen dem Gewindebolzen und den Führungen des zweiten Bauteiles sowie des zwischen den Anlageflächen der beiden Bauteile bestehenden Reibschlusses eine Verschiebung des ersten Bauteiles gegenüber dem zweiten Bauteil erfolgt.

Weitere Einzelheiten und Vorteile der Erfindung ergeben sich aus den folgenden anhand von Figuren erläuterten Ausführungsbeispielen. Es zeigen:

Fig.1 und 2 den Schnitt durch ein erstes Ausführungsbeispiel einer erfindungsgemäßen Vorrichtung vor und nach dem Spannvorgang der beiden miteinander zu verbindenden Bauteile;

Fig.3 den Schnitt durch ein an der Lenksäule befestigtes Lenkschloß eines Kraftfahrzeuges, wobei das Lenkschloß mit Hilfe einer in den Fig.1 und 2 dargestellten erfindungsgemäßen Vorrichtung an der Lenksäule verbunden ist, und

Fig.4 den Schnitt durch ein weiteres Ausführungsbeispiel einer erfindungsgemäßen Vorrichtung.

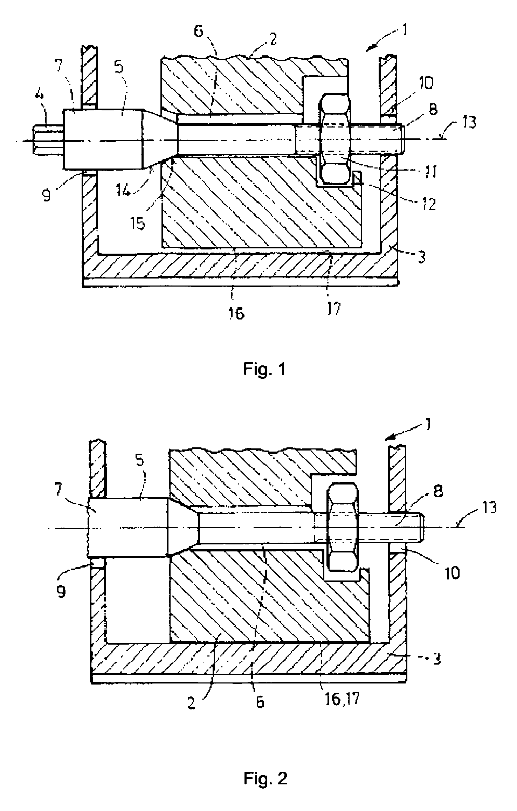

In den Fig.1 und 2 ist mit 1 eine erfindungsgemäße Vorrichtung bezeichnet, die zwei spielfrei miteinander zu verbindende Bauteile 2, 3 und einen mit einem Abreißkopf 4 versehenen Gewindebolzen 5 umfaßt. Dabei ist der Gewindebolzen 5 durch eine Bohrung 6 des ersten Bauteiles 2 hindurchgeführt, dessen Durchmesser derart gewählt ist, daß der Gewindebolzen 5 innerhalb eines vorgegebenen Toleranzbereiches auch senkrecht zu seiner Längsachse 13 verschiebbar ist. Die beiden Endbereiche 7 und 8 des Gewindebolzens 5 werden von spielbehafteten Führungen 9 und 10 des zweiten Bauteiles 3 aufgenommen.

Auf den Gewindebolzen 5 ist eine Mutter 11 aufgeschraubt, die in einem an dem ersten Bauteil 2 angeordneten Sitz 12 drehfest angeordnet und ebenfalls senkrecht zur Längsachse 13 des Gewindebolzens 5 verschiebbar ist.

Der Gewindebolzen 5 weist ferner einen konusförmigen Bereich 14 auf, dem ein konusförmiger Bereich 15 der Bohrung 6 des ersten Bauteiles 2 entspricht.

Nachfolgend wird auf die Wirkungsweise der in den Fig.1 und 2 dargestellten Vorrichtung 1 näher eingegangen. Zur Verbindung der beiden Bauteile 2 und 3 wird zunächst der Gewindebolzen 5 durch die Führung 9 in die Bohrung 6 eingeführt und in die Mutter 11 eingeschraubt, bis die konusförmig ausgebildeten Bereiche 14 und 15 der beiden Bauteile 2 und 3 zur Anlage kommen (Fig.1).

Bei einem weiteren Einschrauben des Gewindebolzens 5 in die Mutter 11 werden die Endbereiche 7, 8 des Gewindebolzens 5 gegen die oberen Wandbereiche der Führungen 9, 10 gedrückt, und das erste Bauteil 2 wird senkrecht zur Längsachse 13 des Gewindebolzens 5 so lange verschoben, bis seine untere Anlagefläche 16 sich an die gegenüberliegende Anlagefläche 17 des zweiten Bauteiles 3 anlegt (sofern sich nicht die Anlageflächen 16 und 17 aufgrund des Eigengewichtes des Bauteiles 2 bereits berühren).

Wird der Gewindebolzen 5 nun weiter gedreht, so reißt der Abreißkopf 4 nach Erreichen eines vorgegebenen Anpreßdruckes der beiden Anlageflächen 16, 17 ab und die Bauteile 2, 3 sind in definierter Weise spielfrei miteinander verbunden (Fig.2).

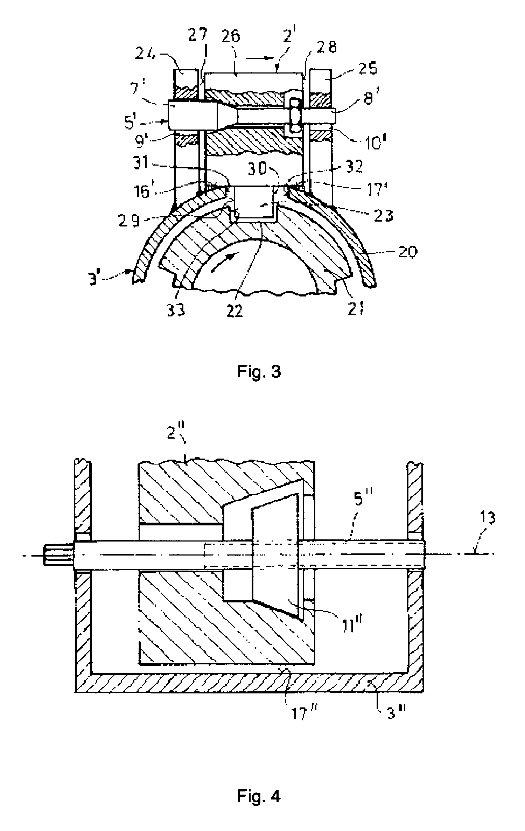

Fig.3 zeigt eine mögliche Verwendung einer derartigen Vorrichtung zur Befestigung eines Lenkschlosses an die Lenksäule eines Kraftfahrzeuges. Dabei sind das Lenkschloß mit 2' und die Lenksäule mit 3' bezeichnet. Die Lenksäule 3' umfaßt, in an sich bekannter Weise, ein feststehendes Mantelrohr 20 und eine drehbare Lenkspindel 21. In der Lenkspindel 21 sind nutenförmige Ausnehmungen 22 vorgesehen, in welche ein Sperrbolzen 23 des Lenkschlosses 2' zur Verriegelung der Lenkspindel 21 eingreift.

Zur Verbindung des Lenkschlosses 2' mit der Lenksäule 3' ist ein Gewindebolzen 5' vorgesehen, dessen Endbereiche 7', 8' in Führungen 9', 10' zweier Seitenwände 24, 25 einer mit dem Mantelrohr 20 verbundenen Aufnahme lagern. Der Gewindebolzen 5' selbst ist durch eine Ausnehmung 6' des Lenkschloßgehäuses 26 hindurchgeführt und wirkt mit einer Mutter 11' in der vorstehend in den Fig. 1 und 2 dargestellten Weise zusammen. Dabei wird das Lenkschloß 2' mit seiner unteren Anlagefläche 16' gegen eine Anlagefläche 17' des Mantelrohres 20 gedrückt.

Wie der Fig.3 entnehmbar ist, weisen die Seitenflächen 27, 28 des Lenkschloßgehäuses 26 und die beiden Seitenwände 24, 25 der an dem Mantelrohr 20 befestigten Aufnahme jeweils einen relativ großen Abstand voneinander auf. Gleiches gilt auch für den Abstand zwischen den seitlichen Randbereichen 29, 30 des Sperrbolzens 23 und den benachbarten Randbereichen 31, 32 des Mantelrohres 20.

Wird daher bei der in Fig.3 dargestellten Anordnung durch Drehung eines nicht dargestellten Lenkrades versucht, die Lenkspindel 21 im Uhrzeigersinn zu drehen, so drückt der entsprechende seitliche Rand 33 der nutenförmigen Ausnehmung 22 gegen den Sperrbolzen 23, welcher seinerseits versucht, das Lenkschloßgehäuse 26 in Richtung der Längsachse 13 des Gewindebolzens 5' (nach rechts) zu verschieben.

Wird nun durch entsprechende Krafteinleitung durch Drehversuche des Lenkrades der zwischen den Anlageflächen 16', 17' und dem Gewindebolzen 5' und den Führungen 9', 10' bestehende Reibschluß überwunden, so wirkt das Lenkschloßgehäuse 26 zunächst nicht direkt auf die mit dem Mantelrohr 20 verbundenen Aufnahme des Lenkschlosses 2' und der gegebenenfalls daran noch weiteren befestigten Teile und Baugruppen, sondern wird in einer zur Längsachse 13 des Gewindebolzens 5' parallelen Richtung verschoben.

Die Erfindung ist selbstverständlich nicht auf die vorstehend beschriebenen Ausführungsbeispiele beschränkt. So kann beispielsweise der konusförmige Bereich des Gewindebolzens ersetzt werden durch einen konusförmigen Bereich der Mutter, welcher mit einem komplementären Bereich der Ausnehmung zusammenwirkt. Ein entsprechendes Ausführungsbeispiel ist in Fig.4 dargestellt.

Dabei sind das erste Bauteil mit 2", das zweite Bauteil mit 3" und der Gewindebolzen mit 5" bezeichnet. Auf den Gewindebolzen 5" ist in diesem Fall eine Mutter 11" mit, in Richtung der Längsachse 13 des Gewindebolzens 5" gesehen, konischer äußerer Oberfläche aufgeschraubt. Die Mutter 11" ist gegenüber dem ersten Bauteil 2" drehfest, aber axial verschiebbar angeordnet. Wird daher der Gewindebolzen 5" gedreht, so verschiebt sich die Mutter 11" und drückt dabei das erste Bauteil 2" nach unten in Richtung auf die Anlagefläche 17" des zweiten Bauteiles 3".

**Bezugszeichenliste**

1 Vorrichtung

2, 2',2" (erste) Bauteil, Lenkschloß

3, 3',3" (zweite) Bauteil, Lenksäule

4 Abreißkopf

5,5',5" (bolzenförmiges) Verbindungselement, Gewindebolzen

6,6' Bohrung, Ausnehmung

7,7' Endbereich

8,8' Endbereich

9,9' Führung

10,10' Führung

11,11',11" Mutter

12 Sitz

13 Längsachse

14 konusförmiger Bereich

15 (konusförmiger) Bereich

16,16' Anlageflächen

17,17',17" Anlageflächen

20 Mantelrohr

21 Lenkspindel

22 nutenförmige Ausnehmung

23 Sperrbolzen

24,25 Seitenwände

26 Lenkschloßgehäuse

27,28 Seitenflächen

29,30 Randbereiche

31,32 Randbereiche

33 seitlicher Rand

## Patentansprüche

1. Vorrichtung mit mindestens zwei Bauteilen (2, 3; 2', 3'; 2", 3") und einem bolzenförmigen Verbindungselement (5; 5'; 5") zur Verbindung der beiden Bauteile (2, 3; 2', 3'; 2", 3") mit den Merkmalen:
a) bei dem bolzenförmigen Verbindungselement (5; 5'; 5") handelt es sich um einen Gewindebolzen, der durch eine Ausnehmung (6; 6') des ersten Bauteiles (2; 2'; 2") hindurchgeführt und auf seinen beiden dem ersten Bauteil (2; 2'; 2") abgewandten Seiten in Führungen (9, 10; 9', 10') des zweiten Bauteiles (3; 3'; 3") gelagert ist;
b) der Gewindebolzen (5; 5'; 5") ist in eine Mutter (11; 11'; 11") der Vorrichtung (1) einschraubbar, die in einem an dem ersten Bauteil (2; 2'; 2") befestigten Sitz (12) senkrecht zur Längsachse (13) des Gewindebolzens (5; 5'; 5") verschiebbar angeordnet ist;
c) der Gewindebolzen (5; 5'; 5") ist innerhalb eines vorgegebenen Toleranzbereiches in der zu seiner Längsachse (13) senkrechten Richtung in der Ausnehmung (6; 6') des ersten Bauteiles (2; 2'; 2") und in den Führungen (9, 10; 9', 10') des zweiten Bauteiles (3; 3'; 3") verschiebbar gelagert, und
d) der Gewindebolzen (5; 5'; 5") und/oder die Mutter weisen einen konusförmigen Bereich (14) auf, der sich bei Drehung des Gewindebolzens (5; 5'; 5") verschiebt und gegen einen komplementären Bereich (15) des ersten Bauteiles (2; 2';2") drückt, so daß dieses in eine senkrecht zur Bewegungsrichtung des Gewindebolzens (5; 5'; 5") gerichtete Spannrichtung verschoben und das erste Bauteil (2; 2';2") gegen eine Anlagefläche (17; 17'; 17") des zweiten Bauteiles (3; 3'; 3") gepreßt wird.

2. Vorrichtung nach Anspruch 1, **dadurch gekennzeichnet, daß** der Gewindebolzen (5; 5'; 5") mit einem Abreißkopf (4) versehen ist, welcher bei einem vorgebbaren Drehmoment und damit einer vorgegebenen Anpreßkraft des ersten Bauteiles (2; 2'; 2") gegen das zweite Bauteil (3; 3'; 3") abreißt.

3. Vorrichtung nach der Anspruch 1 oder 2, **dadurch gekennzeichnet, daß** das erste Bauteil (2; 2';2") gegenüber dem zweiten Bauteil (3; 3'; 3") in Richtung der Längsachse (13) des Gewindebolzens (5; 5'; 5") verschiebbar ausgebildet ist, so daß bei Ausübung von Kräften auf das erste Bauteil (2; 2';2") in einer zur Längsachse (13) des Gewindebolzens (5; 5'; 5") parallelen Richtung nach Überwindung des zwischen dem Gewindebolzen (5; 5'; 5") und den Führungen (9, 10; 9', 10') des zweiten Bauteiles (3; 3'; 3") sowie des zwischen den Anlageflächen (16, 17; 16', 17'; 17") der beiden Bauteile bestehenden Reibschlusses eine axiale Verschiebung des ersten Bauteiles (2; 2';2") gegenüber dem zweiten Bauteil (3; 3'; 3 ") erfolgt.

4. Verwendung der Vorrichtung nach einem der Ansprüche 1 bis 3 zur Befestigung eines Lenkschlosses an der Lenksäule eines Kraftfahrzeuges.

## Claims

1. Device with at least two components (2, 3; 2', 3'; 2", 3") and a bolt-shaped connecting element (5; 5'; 5") for the connection of both components (2, 3; 2' 3'; 2", 3") with the attributes:
a) With the bolt-shaped connecting element (5; 5'; 5"), it deals with a threaded bolt, which leads through a recess (6; 6) of the first component (2; 2'; 2") and is positioned on both of its sides averted from the first component (2; 2'; 2") in the guides (9, 10; 9', 10') of the second component (3; 3; 3");
b) The threaded bolt (5; 5'; 5") is able to be screwed into a nut (11; 11'; 11") of the device (1), which is arranged movably on a fixed seat (12) on the first component (2; 2'; 2"), perpendicular to the longitudinal axis (13) of the threaded bolt (5; 5'; 5");
c) The threaded bolt (5; 5'; 5") is, within a prescribed tolerance range, positioned movably in a perpendicular direction to its longitudinal axis (13) in the recess (6; 6') of the first component (2; 2'; 2") and in the guides (9,10; 9', 10') of the second component (3; 3'; 3"), and
d) The threaded bolt (5; 5'; 5") and/or the nut exhibit a cone-shaped area (14), which during the turning of the threaded bolt (5; 5'; 5") moves and presses against a complementary area (15) of the first component (2; 2;2"), so that this is moved in a direction of clamping that is perpendicular to the direction of movement of the threaded bolt (5; 5'; 5"), and so that the first component (2; 2';2") is pressed against a contact surface (17; 17'; 17") of the second component (3; 3'; 3").

2. Device according to Claim 1, **characterized in that** the threaded bolt (5; 5'; 5") is provided with a sheared-off head (4), which breaks away at a specifiable torque, and thereby at a specified contact pressure of the first component (2; 2'; 2") against the second component (3; 3'; 3").

3. Device according to Claim 1 or 2, **characterized in that** the first component (2; 2';2") is movably formed in relation to the second component (3; 3'; 3") in the direction of the longitudinal axis (13) of the threaded bolt (5; 5'; 5"), so that with the exertion of force on the first component (2; 2';2") in the direction parallel to the longitudinal axis (13) of the threaded bolt (5;.5'; 5"), after overcoming the existing friction resistance between the threaded bolt (5; 5'; 5") and the guides (9, 10; 9', 10') of the second component (3; 3'; 3"), as well as between the contact surfaces (16, 17; 16', 17'; 17") of both components, an axial movement of the first component (2; 2';2") in relation to the second component (3; 3'; 3") occurs.

4. Usage of the device according to one of the Claims 1 through 3, for attaching a steering lock to the steering column of a motor vehicle.

## Revendications

1. Dispositif constitué d'au moins deux composants (2, 3; 2', 3' ; 2", 3") et d'un élément de liaison en forme de boulon (5 ; 5' ; 5") destiné à relier les deux composants, **caractérisé en ce que**
a) l'élément de liaison en forme de boulon (5 ; 5' ; 5") est un boulon fileté qui passe à travers un évidement (6 ; 6') du premier composant (2 ; 2') et qui, par ses deux faces opposées au premier composant (2 ; 2', 2"), est monté dans des guidages (9, 10 ; 9', 10') du second composant (3 ; 3' ; 3") ;
b) le boulon (5 ; 5' ; 5") se visse dans un écrou (11; 11'; 11") du dispositif (1), ledit écrou étant déplaçable dans le sens vertical par rapport à l'axe longitudinal (13) du boulon fileté (5 ; 5' ; 5") dans un siège (12) fixé au premier composant (2 ; 2' ; 2") ;
c) le boulon fileté (5 ; 5' ; 5") est monté dans l'évidement (6 ; 6') du premier composant (2 ; 2', 2") et dans les guidages (9, 10 ; 9', 10') du second composant (3 ; 3', 3"), dans lesquels il se déplace verticalement par rapport à son axe longitudinal (13) à l'intérieur d'une plage de tolérance prédéfinie, et **en ce que**
d) le boulon fileté (5 ; 5' ; 5") et/ou l'écrou présentent une partie en forme de cône (14) qui, lors de la rotation du boulon fileté (5 ; 5' ; 5"), se déplace et exerce une pression sur une partie complémentaire (15) du premier composant (2 ; 2', 2") de manière à la déplacer dans un sens de serrage vertical par rapport au sens de déplacement du boulon fileté (5 ; 5' ; 5") et à presser le premier composant (2 ; 2', 2") contre une surface d'appui (17 ; 17', 17") du second composant (3 ; 3', 3").

2. Dispositif selon la revendication 1, **caractérisé en ce que** le boulon fileté (5 ; 5' ; 5") est muni d'une tête de rupture (4) qui se rompt si un couple de rotation pré-définissable est appliqué et, par conséquent, si le premier composant (2 ; 2' ; 2") est pressé contre le second composant (3 ; 3' ; 3") avec une force prédéterminée.

3. Dispositif selon la revendication 1 ou 2, **caractérisé en ce que** le premier composant (2 ; 2' ; 2") est réalisé de manière à se déplacer dans le sens de l'axe longitudinal (13) du boulon fileté (5 ; 5' ; 5") par rapport au second composant (3 ; 3' ; 3") afin d'obtenir, lorsque des forces sont exercées sur le premier composant (2 ; 2' ; 2") dans une direction parallèle à l'axe longitudinal (13) du boulon fileté (5 ; 5' ; 5") et une fois vaincue la liaison par friction qui se produit entre le boulon fileté (5 ; 5' ; 5") et les guidages (9, 10 : 9', 10') du second composant (3 ; 3' ; 3") ainsi qu'entre les surfaces d'appui (16, 17, 16', 17' ; 17") des deux composants, un déplacement axial du premier composant (2 ; 2' ; 2") par rapport au second composant (3 ; 3' ; 3").

4. Utilisation du dispositif selon l'une des revendications 1 à 3 pour fixer une serrure antivol sur la colonne de direction d'un véhicule automobile.
